# EUROPÄISCHE PATENTSCHRIFT

(11) **EP 1 923 593 B1**
(45) Veröffentlichungstag und Bekanntmachung des Hinweises auf die Patenterteilung: **19.10.2011**
(21) Anmeldenummer: 07020697.4
(22) Anmeldetag: 23.10.2007
(51) Int. Cl.: F16F 1/38, F16F 13/14

(54) **Radiallagerbuchse**
Radial bearing bush
Coussinet radial

(30) Priorität: 09.11.2006 DE 102006053166
(43) Veröffentlichungstag der Anmeldung: 21.05.2008
(73) Patentinhaber: Carl Freudenberg KG, 69469 Weinheim (DE)
(72) Erfinder: Schwarz, Helge, 21376 Garlstorf (DE); Breiden, Oliver, 21075 Hamburg (DE)

(56) Entgegenhaltungen:
- EP-A1- 0 611 901
- EP-A1- 1 193 418
- DE-A1- 19 718 190

## Beschreibung

### Technisches Gebiet

Die Erfindung betrifft eine Radiallagerbuchse, insbesondere Fahrwerkbuchse, mit einem metallischen Kern und einer mit Abstand dazu angeordneten Außenhülse, zwischen denen ein elastomerer Federkörper eingefügt ist. Derartige Radiallagerbuchsen werden auch als Hülsengummifedern bezeichnet. In vielgestaltiger Ausführungsform finden sie eine vielseitige Anwendung.

### Stand der Technik

In der DE 85 27 583 U ist beispielsweise eine Radiallagerbuchse gezeigt, die aus einem metallischen Kern und einer mit Abstand dazu angeordneten Außenhülse besteht. Zwischen dem Kern und der Außenhülse ist ein elastomerer Federkörper eingefügt, durch den zwei in Krafteinleitungsrichtung hintereinander liegende und mit Flüssigkeit gefüllte Kammern begrenzt werden. Die beiden Kammern stehen über einen umlaufenden Drosselspalt miteinander in Verbindung.

In den DE 36 17 787 A, DE 37 41 260 C2 und DE 39 33 197 C2 sind weitere Ausgestaltungen von Radiallagerbuchsen bzw. Hülsengummifedern gezeigt mit jeweils spezieller Ausbildung.

Eine besondere Ausgestaltung hat die Hülsengummifeder nach der EP 0 384 007 B1, bei der zwei Federkörper eingesetzt werden, die radial zueinander liegen und bei der außerdem die radial außen liegenden Enden des äußeren Federkörpers an ein Fensterrohr anschließen.

Allen im Stand der Technik bekannten Radiallagerbuchsen ist gemeinsam, dass sie die heute gegebenen thermischen Anforderungen im Motorraum nicht in allen Fällen erfüllen können. Durch die steigende Leistungsdichte bei modernen Kraftfahrzeug-Verbrennungsmotoren nehmen die thermischen Anforderungen an Bauteile in diesem Bereich ständig zu. Dies wird durch zusätzliche Aggregate im Motorraum und auch durch die zunehmende Kapselung des Motorraums noch verstärkt. Durch die gewünschte Reduzierung an Gewicht kommt auch mehr und mehr Aluminium als Werkstoff für Hilfsrahmen zum Einsatz. Auf Grund der hohen Wärmeleitfähigkeit von Aluminium kommt es hier zu einer starken thermischen Belastung aller damit in Kontakt stehenden Bauteile. Auch die am Hilfsrahmen verschraubten Fahrwerkbuchsen nehmen über ihren metallischen Lagerkem Wärme auf, was zu erhöhter Temperatur des Lagers und damit zu einer thermischen Belastung des aus Elastomer bestehenden Federkörpers führt.

In der EP 0 611 901 A1 ist das Problem eines Ausgleichs von unterschiedlichen Wärmedehnungen bei hydraulisch dämpfenden Lagerbuchsen angesprochen. Hierfür wird im Bereich zwischen den Tragfedern angrenzend an die Hülse für den Überströmkanal je ein Absorber aus einem Elastomer mit eingeschlossenen Gasbläschen angeordnet. Dieser Absorber ist relativ leicht zusammenpressbar und kann damit durch Wärmedehnung bedingte Volumenänderungen in den mit Flüssigkeit gefüllten Kammern ausgleichen. Der über den metallischen Kern eingeleitete Wärmefluss findet jedoch ungehindert statt.

### Darstellung der Erfindung

Der Erfindung liegt deshalb die Aufgabe zugrunde, eine Radiallagerbuchse zu schaffen, die unter Beibehaltung einfacher Fertigungsmethoden den neu gestellten Anforderungen hinsichtlich der thermischen Belastung entspricht und eine hohe Betriebsdauer hat.

Die Lösung der gestellten Aufgabe wird mit den Merkmalen des Anspruchs 1 erreicht. Die Unteransprüche 2 bis 9 stellen vorteilhafte Weiterbildungen des Erfindungsgegenstandes dar.

Der Grundgedanke der Erfindung besteht darin, dass der Kern der Lagerbuchse von einer aus einem isolierenden Kunststoff bestehenden Hülle ummantelt wird. Durch diese Isolierung wird verhindert, dass der auf den Lagerkem auftreffende Wärmefluss, insbesondere von den Stirnseiten des Kerns her, den elastomeren Federkörper schädigen kann. Durch die Ummantelung aus einem isolierenden Kunststoff wird der Federkörper vom direkten Wärmefluss abgeschirmt. Die Dicke der Ummantelung kann dabei unterschiedlich gewählt werden, je nach der gewünschten Isolierung,

Die Erfindung kann bei beliebig ausgestalteten Lagerbuchsen angewendet werden. Eine große Zahl der Radiallagerbuchsen ist jedoch mit zwei Flüssigkeitskammern versehen, die durch längs verlaufende Elastomerwände des Federkörpers getrennt sind.

Die Verbindung der Kunststoffhülle mit dem Kern kann auf verschiedene Weise sowohl kraftschlüssig als auch formschlüssig erfolgen. Von Vorteil ist weiter, wenn bei Lagerbuchsen mit Flüssigkeitskammern die Kunststoffhülle auf ihrer Außenwand mit Auswölbungen versehen ist, die als Anschläge ausgebildet sind. Hierdurch werden Extremausschläge bei der Federung begrenzt.

Günstig ist ferner, wenn die Kunststoffhülle, insbesondere an ihren Endteilen, mit Montagekonturen für Anschlusszwecke ausgestattet ist. Hierdurch können zusätzlich Teile am Lager montiert werden.

Es ist weiterhin günstig, wenn die Kunststoffhülle mindestens in ihrem mittleren Bereich ballig ausgebildet ist. Hierdurch wird eine sehr vorteilhafte Anbindung des Elastomers an der Kunststoffhülle erreicht. Eventuell auftretende Kardanikbewegungen werden hierdurch gut abgefedert.

Die bevorzugte Ausführungsform der flüssigkeitsgefüllten Radiallagerbuchse sieht vor, dass zwischen der Außenhülse und dem Federkörper ein Fensterrohr eingefügt ist. An diesem Fensterrohr sind die radial außen liegenden Enden der Elastomerstege des Federkörpers befestigt.

### Kurzbeschreibung der Zeichnung

Anhand der in der Zeichnung dargestellten Ausführungsbeispiele wird die Erfindung nachstehend näher erläutert.

Es zeigt
- Fig. 1: eine konventionelle Lagerbuchse im Halbschnitt mit einem Federkörper in Ringform;
- Fig. 2: eine Radiallagerbuchse im Halbschnitt mit Flüssigkeitskammern und
- Fig. 3: die Radiallagerbuchse nach Fig. 2 im Querschnitt gesehen.

### Ausführung der Erfindung

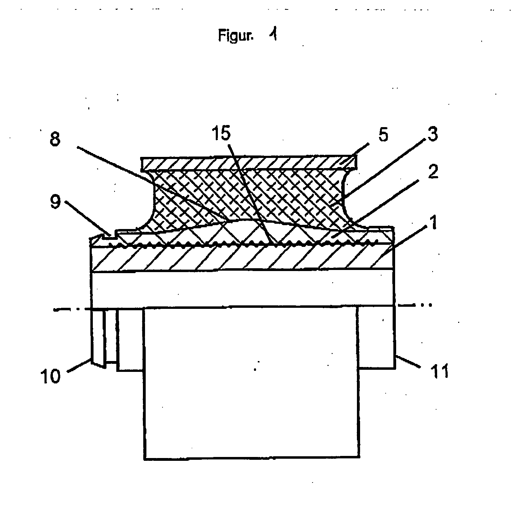

Die in der Fig. 1 gezeigte Radiallagerbuchse besteht aus dem metallischen Kern 1 der von der aus isolierendem Kunststoff bestehenden Hülle 2 ummantelt ist. Der Kern 1 hat eine gerändelte Außenfläche 15, durch weiche eine sehr stabile Befestigung der Hülle 2 auf dem Kern 1 erreicht wird. Durch das Schrumpfen des Kunststoffs beim Abkühlen nach dem Fertigungsprozess, der beispielsweise durch Umspritzen vorgenommen werden kann, entsteht eine sehr feste Verbindung zwischen der Kunststoffhülle 2 und dem Kern 1. Die Kunststoffhülle 2 ist an ihren axialen Rändern gleichmäßig dick und hat in ihrem mittleren Teil 8 eine ballige Auswölbung. Zwischen der Kunststoffhülle 2 und der Außenhülse 5 ist der Federkörper 3 aus einem elastomeren Material eingefügt. Die Verbindung zwischen dem Federkörper 3 und der Kunststoffhülle 2 sowie der Außenhülse 5 erfolgt durch Vulkanisation. Der Federkörper 3 ist aus einem Vollmaterial und umschließt den Kern 1 ringförmig. Die von den Stirnseiten 10 und 11 in den Kern eingeleitete Temperatur wird von der Kunststoffhülle 2 isoliert, so dass der Federkörper 3 vor extremer Wärmebelastung geschützt ist. An der Stirnseite 10 ist beispielsweise eine Montagehilfe 9 in Form einer umlaufenden Nut gezeigt, um hier weitere Bauteile anbringen zu können.

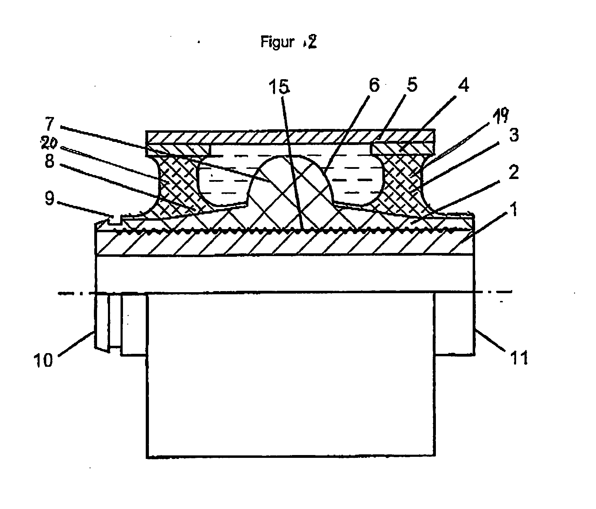

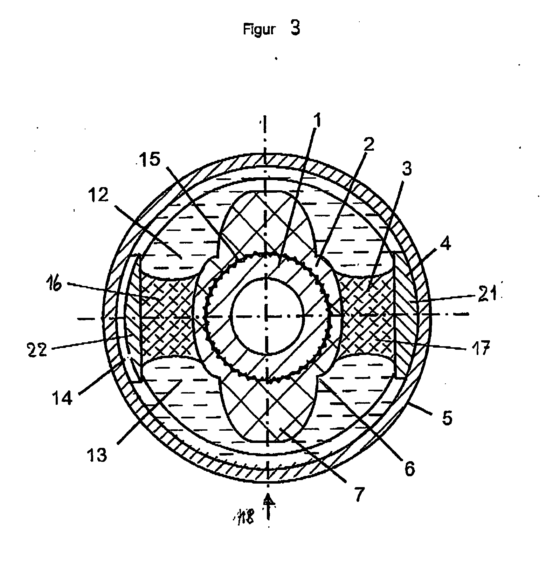

In den Figuren 2 und 3 ist die bevorzugte Ausführungsform der Radiallagerbuchse dargestellt, bei der der Federkörper 3 nicht als Vollgummi ausgeführt ist, sondern axial verlaufende Stege 16, 17 hat, welche zwei sich gegenüberliegende und mit Flüssigkeit gefüllte Kammern 12 und 13 voneinander trennen. Die Kammern 12 und 13 liegen in Krafteinleitungsrichtung 18, wie mit dem Pfeil angezeigt. Beide Kammern 12 und 13 sind mit einer Flüssigkeit gefüllt und stehen über den Dämpfungskanal 14 miteinander in Verbindung. Seitlich sind die Kammern 12 und 13 durch die Ringwülste 19 und 20 begrenzt. Den radial äußeren Abschluss bildet die Außenhülse 5. In ihrer mittigen Außenwand 6 ist die Kunststoffhülle 2 mit in die Kammern 12 und 13 ragenden Auswölbungen 7 versehen, die als Anschläge ausgebildet sind und die eine Begrenzung für den maximalen Ausschlag der Lagerbuchse bilden. Zwischen die Außenhülse 5 und den Federkörper 3 ist das Fensterrohr 4 eingefügt. An den innen liegenden Flächen des Fensterrohres 4 sind die radial außen liegenden Enden der Stege 16 und 17 sowie die Ringwülste 19 und 20 des Federkörpers 3 befestigt. Dabei ist es günstig, dass das Fensterrohr 4 im Bereich der axialen Stege 16, 17 mit den Verstärkungen 21 bzw. 22 versehen ist, welche die Form von Kreisabschnitten haben und in die vorteilhafter Weise der Dämpfungskanal 14 untergebracht werden kann.

## Patentansprüche

1. Radiallagerbuchse, insbesondere Fahrwerksbuchse, mit einem metallischen Kern (1) und einer mit Abstand dazu angeordnet Außenhülse (5), zwischen denen ein elastomerer Federkörper (3) eingefügt ist, **dadurch gekennzeichnet, dass** der Kern (1) von einer aus einem isolierenden Kunststoff bestehenden Hülle (2) ummantelt ist.

2. Radiallagerbuchse nach Anspruch 1, **dadurch gekennzeichnet, dass** der Federkörper (3) axial verlaufende Stege (16,17) hat, welche mindestens zwei einander gegenüber liegende, mit einer Flüssigkeit gefüllte und über mindestens einen Dämpfungskanal (14) miteinander kommunizierende Kammern (12 und 13) bilden.

3. Radiallagerbuchse nach Anspruch 1 oder 2, **dadurch gekennzeichnet, dass** die Kunststoffhülle (2) mit dem Kern (1) kraftschlüssig verbunden ist.

4. Radiallagerbuchse nach Anspruch 1 oder 2, **dadurch gekennzeichnet, dass** die Kunststoffhülle (2) formschlüssig mit dem Kern (1) verbunden ist.

5. Radiallagerbuchse nach Anspruch 1 bis 4, **dadurch gekennzeichnet, dass** die Kunststoffhülle (2) mindestens in ihrem mittleren Teil ballig ausgebildet ist.

6. Radiallagerbuchse nach Anspruch 1 bis 5, **dadurch gekennzeichnet, dass** die Kunststoffhülle (2) mit Montagekonturen (9) für Anschlusszwecke versehen ist.

7. Radiallagerbuchse nach Anspruch 2, **dadurch gekennzeichnet, dass** die Kunststoffhülle (2) auf ihrer mittigen Außenwand mit in die Kammern (12, 13) ragenden, als Anschläge ausgebildeten Auswölbungen (7) versehen ist.

8. Radiallagerbuchse nach Anspruch 1 bis 7, **dadurch gekennzeichnet, dass** zwischen Außenhülse (5) und Federkörper (3) ein Fensterrohr (4) eingefügt ist.

9. Radiallagerbuchse nach Anspruch 2, **dadurch gekennzeichnet, dass** die radial außen liegenden Enden der Elastomerstege (16, 17) und die Ringwülste (19, 20) des Federkörpers (3) am Fensterrohr (4) befestigt sind.

## Claims

1. Radial bearing bush, in particular chassis bush, having a metallic core (1) and having an outer sleeve (5) arranged with a spacing to said core, between which core and outer sleeve is inserted an elastomeric spring body (3), **characterized in that** the core (1) is encased by a cladding (2) composed of an insulating plastic.

2. Radial bearing bush according to Claim 1, **characterized in that** the spring body (3) has axially running webs (16, 17) which form at least two chambers (12 and 13), which chambers are situated opposite one another, are filled with a liquid and communicate with one another via at least one damping duct (14).

3. Radial bearing bush according to Claim 1 or 2, **characterized in that** the plastic cladding (2) is connected to the core (1) in a non-positively locking manner.

4. Radial bearing bush according to Claim 1 or 2, **characterized in that** the plastic cladding (2) is connected to the core (1) in a positively locking manner.

5. Radial bearing bush according to Claim 1 to 4, **characterized in that** the plastic cladding (2) is of crowned design at least in its central part.

6. Radial bearing bush according to Claim 1 to 5, **characterized in that** the plastic cladding (2) is provided with assembly contours (9) for connection purposes.

7. Radial bearing bush according to Claim 2, **characterized in that** the plastic cladding (2) is provided, on its central outer wall, with bulged portions (7) which project into the chambers (12, 13) and which are formed as stops.

8. Radial bearing bush according to Claim 1 to 7, **characterized in that** an apertured tube (4) is inserted between the outer sleeve (5) and spring body (3).

9. Radial bearing bush according to Claim 2, **characterized in that** the radially outer ends of the elastomeric webs (16, 17) and the annular ridges (19, 20) of the spring body (3) are fastened to the apertured tube (4).

## Revendications

1. Coussinet radial, en particulier douille de train de roulement, avec un noyau métallique (1) et avec une douille extérieure (5) disposée à distance de celui-ci, entre lesquels est inséré un corps élastique élastomère (3), **caractérisé en ce que** le noyau (1) est entouré d'une gaine (2) composée d'une matière plastique isolante.

2. Coussinet radial selon la revendication 1, **caractérisé en ce que** le corps élastique (3) comporte des nervures (16, 17) s'étendant axialement, qui forment au moins deux chambres (12 et 13) opposées l'une à l'autre, remplies d'un liquide et communicant l'une avec l'autre par au moins un canal d'amortissement (14).

3. Coussinet radial selon la revendication 1 ou 2, **caractérisé en ce que** la gaine de matière plastique (2) est assemblée au noyau (1) par complémentarité de force.

4. Coussinet radial selon la revendication 1 ou 2, **caractérisé en ce que** la gaine de matière plastique (2) est assemblée au noyau (1) par complémentarité de forme.

5. Coussinet radial selon l'une quelconque des revendications 1 à 4, **caractérisé en ce que** la gaine de matière plastique (2) est de forme bombée au moins dans sa partie médiane.

6. Coussinet radial selon l'une quelconque des revendications 1 à 5, **caractérisé en ce que** la gaine de matière plastique (2) est munie de contours de montage (9) pour des besoins de raccordement.

7. Coussinet radial selon la revendication 2, **caractérisé en ce que** la gaine de matière plastique (2) est munie, sur sa paroi extérieure médiane, de bombages (7) formant butées pénétrant dans les chambres (12, 13).

8. Coussinet radial selon l'une quelconque des revendications 1 à 7, **caractérisé en ce qu'**un tube de fenêtre (4) est inséré entre la douille extérieure (5) et le corps élastique (3).

9. Coussinet radial selon la revendication 2, **caractérisé en ce que** les extrémités situées radialement à l'extérieur des nervures élastomères (16, 17) et les bourrelets annulaires (19, 20) du corps élastique (3) sont fixés au tube de fenêtre (4).
